# EUROPEAN PATENT SPECIFICATION

(11) **EP 1 471 785 B1**
(45) Date of publication and mention of the grant of the patent: **07.03.2007**
(21) Application number: 03704323.9
(22) Date of filing: 10.01.2003
(51) Int. Cl.: A01K 1/02, G05D 23/27

(54) **METHOD AND ARRANGEMENT FOR CONTROLLING THE TEMPERATURE IN A PIGLET NEST IN A FARROWING**
VERFAHREN UND ANORDNUNG FÜR DIE TEMPERATURKONTROLLE IN EINEM FERKELNEST IN EINEM SAUENSTALL
PROCEDE ET DISPOSITIF DE REGULATION DE LA TEMPERATURE DANS UN NID A PORCELET DANS UNE ETABLE POUR TRUIES

(30) Priority: 10.01.2002 DK 200200039
(43) Date of publication of application: 03.11.2004
(73) Proprietor: Infradan ApS, 8751 Gedved (DK)
(72) Inventor: TAMBO, Jan, 8751 Gedved (DK)
(74) Representative: Plougmann & Vingtoft A/S
(86) International application number: PCT/DK2003/000015
(87) International publication number: WO 2003/056907

(56) References cited:
- DE-U1- 29 512 064
- GB-A- 2 017 354
- US-A- 2 745 940
- DATABASE WPI Week 198226, Derwent Publications Ltd., London, GB; Class P14, AN 1982-H7598E, XP002976068 & SU 860 018 A (POLT AGRIC INST.) 30 August 1981

## Description

### Background of the Invention

The present invention concerns a method and an arrangement for controlling the temperature in a piglet nest in a farrowing stable where heat supply is controlled in dependence of a temperature registration in the area.

The invention may find application on different animals having a special stable area in which they grow, and where need for heat, specifically temperature, is thus only present when the animals are in the area. This specific temperature may be achieved by cooling as well as by heating.

The invention will, however, be particularly explained in connection with heat boxes or nests for piglets in a farrowing stable and in connection with the special thermal conditions valid for piglets in their first four to five weeks of living. However, there is possibility of using the inventive idea for other animals and within other areas of application, as e. g. of behaviour control.

In piglet nests, there is commonly provided a heating lamp. The heating lamp has the purpose of regulating the temperature in a small area of the farrowing stable. The area is that which the light circle from a heating lamp is covering. Within the light circle there may lie a varying number of piglets. Other heaters may be used, e. g. electric plates or plates/pipes conducting hot water.

The prior art systems may be designed with thermostatic controls in order to ensure a uniform temperature level in the area. These are, however, connected with drawbacks, since a constant heat supply is continually maintained in the area irrespectively of the need therefor. Furthermore, regulation of the temperature to the desired level will occur in dependence of a measurement of the air temperature in the area. Thus, some unnecessary energy may be used when the temperature is very low and when the animals are not within the area, and vice versa. As a result of the wrong surface temperature, the piglets are using energy on heat-seeking or cold-seeking behaviour instead of feed-seeking behaviour. A behaviour resulting in a body weight gain less than otherwise attainable.

US 4,191,879 describe the use of an infrared heating element for heating areas with chickens. The system includes a heat sensor provided by the casing or body 60 with a heat sensitive resistor 80 that is mounted internally in the casing and which resistor is in a heat exchange relation with the casing. The temperature of the casing 60 is proportional with the thermal flux which the casing receives from the infrared heating element. It is described that hereby the temperature which is sensed by the chickens is precisely controlled. Furthermore it is described that the casing 60 is positioned an inch from a floor.

The above described disadvantages also apply for the system described In US 4,191,879.

WO 01/10197 describes a system for cooling of a milking cow by spraying the cow with cool liquid and by blowing air towards the cow with an aim of leading the cows towards a milking position. It is described that an infrared camera 11 is used as a detection means 10 to detect 'heat stress' and for detecting whether formation of droplets are provided. Thus a system is described which is not suitable for control of the temperature in a piglet nest in a farrowing stable where heat supply is controlled In dependence of a temperature registration.

DE 29512064 describes a system which measures the temperature In a farrowing stable using a temperature sensor which is placed on a wall in the farrowing stable. This technique is found to be imprecise in relation to determining a temperature of the piglets and unsuitable for determining any presence of piglets. The heat which is registered can be heat from several other sources than the animals.

It is the purpose of the invention to indicate a new system that relieves these drawbacks, reduces the risk of overlying and enables the provision of an energy economic system for heating the stable area and for increasing body weight gain measured in kg and for reducing mortality.

According to the present invention, this is achieved with a method of controlling the temperature in a piglet nest In a farrowing stable where heat supply is controlled in dependence of a temperature registration in the piglet nest, characterised in that the temperature registration includes infrared temperature measurement of surface temperature and is used for regulating the surface temperature to a desired predetermined level by registering a surface temperature within a predetermined range around the predetermined level, that the heat supply is connected at the registration of a surface temperature within the range, and that the registration of the temperature includes registration of the surface temperature of the animal bodies.

According to an aspect of the method according to the invention, the temperature registration is used also for reducing/interrupting the heat supply at the registration of a temperature under the predetermined range,

The arrangement according to the invention is peculiar in that the arrangement includes an arrangement for controlling the temperature in a piglet nest In a farrowing stable, where heat supply is controlled in dependence of a temperature registration in the piglet nest, where the arrangement Includes controllable heating lamps that are connected with a temperature measuring device, characterized in that the temperature measurement device is arranged for measuring a surface temperature of the animal bodies and includes an infrared temperature measuring device, and an automatic control arranged for regulating the heating lamps in order to keep the surface temperature at a desired predetermined level at the registration of a surface temperature within a predetermined range around the predetermined level.

With such a method and such an arrangement it may be ensured that heat supply is only effected when a temperature within a certain range is registered. If registration of a temperature below this range occurs, it will be possible to reduce or interrupt the heat supply instead of consuming energy by continuously supplying heat. Furthermore, correct surface temperature on the animals is achieved when they are in the area so that body weight gain may be optimised.

It can be possible to reduce the heat supply to the heaters and still maintain a minimal energy consuming light in the area. This is particularly simple to establish if the heaters includes a heating lamp. By maintaining light, the piglets are attracted to the area.
Possibly, this occurs with a flashing sequence attracting the piglets to the area so that the heat-seeking behaviour is utilised. By the system according to the invention, the animal will use less energy for heat-seeking, and therefore an advantageous increase in the body weight gain is attained.

Overlying is reduced by the piglets being more attracted to the light/heat in their heatseeking behaviour than attracted to the sow. This means that the system according to the invention is particularly advantageous as it enables farrowing stables with loose sows and reduced risk of overlying.

Temperature registration occurs by registering the surface temperature of the animal bodies, and by infrared temperature measurement. Thus the heat supply may be reduced/interrupted when the animals have left the area. Thus there may be effected regulation in order to keep the temperature constant.

According to a possible embodiment, the automatic control increases the energy supply to a given level at registration of falling temperature. Then the power supply will immediately be switched off or much reduced for just maintaining light in the area.

The finished arrangement is preferably to be designed so that it is installation friendly, i. e. mounting and installing is preferably to be performed by the user. According to an embodiment, the heaters include a heating lamp, and the temperature measuring device includes an infrared temperature measuring device. The automatic control is to be supplied with 230 V so that usual installations are sufficient for powering the arrangement, and so that the automatic control may be inserted in an existing installation.

The arrangement, including automatic control and associated components, is to function in a stable with dust and ammonia vapours. Therefore, it is preferred that the arrangement fulfils requirements for IP 55 and is made with components of stainless and/or acid-proof materials.

Piglets' need for additional heat changes during the first 4-5 weeks of the pig's life.
The need is characterised by falling from a surface temperature of about 38°C to about 34°C, or even down to about 29°C.

On feedback from the infrared temperature measuring device, the light intensity in the heating lamp is to be regulated so that the desired temperature level, determined according to the actual age for the piglets, is attained.

If the pigs withdraw, or are not present within the area for other reasons, the lamp is to be switched off or reduced in light intensity, respectively. This occurs preferably by registering a temperature deviating more than 5°C below the said temperature level.
Other limits, e. g. down to 0.1°C, for the range are possible.

If the pigs come into the area under the lamp, this is registered by the temperature measuring device. This registration is to provide that the automatic control is to start/regufate the heat supply until the desired temperature level is reached. Then a short settling course of maximum 1 minute is expected.

It is intended that an accuracy of ±0.2°C relative to optimal temperature level is attained. The temperature measuring device is preferably to adjust the heat supply with fixed intervals, e. g. of 30 s, or other intervals down to 1 s.

It is possible to make the arrangement with an automatic control in the shape of a computer with possibility of receiving indication at maximum regulation of heat supply, indication of the time at which the heat supply occurs, registration of temperature course and pattern of movement together with other desirable registrations.

The final product can be made as a PROM solution, a PLC solution or aPC computer based solution.

### Description of the Drawing

The invention will now be explained in connection with a special embodiment and with reference to the accompanying drawing, where:
- Fig.1: shows a schematic view of the main elements in the arrangement according to the invention,
- Fig. 2: shows a course of a curve for a desired temperature level by a method according to the invention, and
- Fig. 3: shows a course of a curve for temperature registration and power supply when the animals leave the area.

In the drawing, only the most essential elements necessary for understanding the idea of the invention are shown. In practice, there will be need for more components for a functioning arrangement. However, a choice of such components will lie within the possibility of the skilled In the art in the light of the above description of the invention.

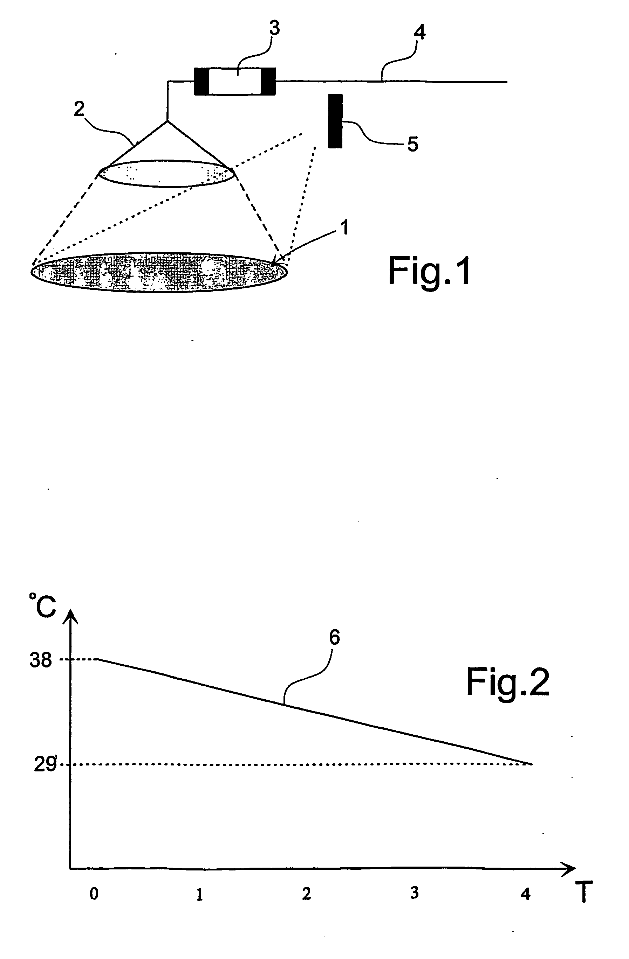

In Fig.1 is shown an area 1 In a stable. The area 1 is placed under a heating lamp 2, which is connected to an automatic control 3. The automatic control 3 and the heating lamp are powered via existing 230V installation 4. The automatic control 3 is adapted to regulate the power supply for the heating lamp 2, or to switch it off completely.

An infrared temperature measuring device 5 is provided so that it can register the temperature In the areal. The temperature measuring device 5 will thus register the body heat for piglets (not shown) located in the area 1. The temperature measuring device 5 may be incorporated in the heating lamp 2 or may be provided as a separately mounted component.
Fig. 2 shows a curve 6 indicating a desired temperature level, which is indicatedin °C, in dependence of time which is indicated in weeks. It appears that there is desired a temperature course dropping from 38°C to 29°C from the time the pigs are born (day 0) until the pigs are four weeks old. This curve is laid in as control parameter in the automatic control 3.

The shown arrangement is applied in that the temperature is registered by the measuring device 5. When piglets are present in the areal, this registration is used for controlling the power supply to the heating lamp 2 in order thereby to regulate the temperature to the desired predetermined level on the curve 6. Hereby, the temperature is held on the desired level when registration of a temperature within a predetermined range around the curve 6 has been performed.

When the piglets are leaving the area 1, this is registered by the measuring device 5 which registers low temperature. This temperature registration is used for regulating the power supply to the heating lamp.

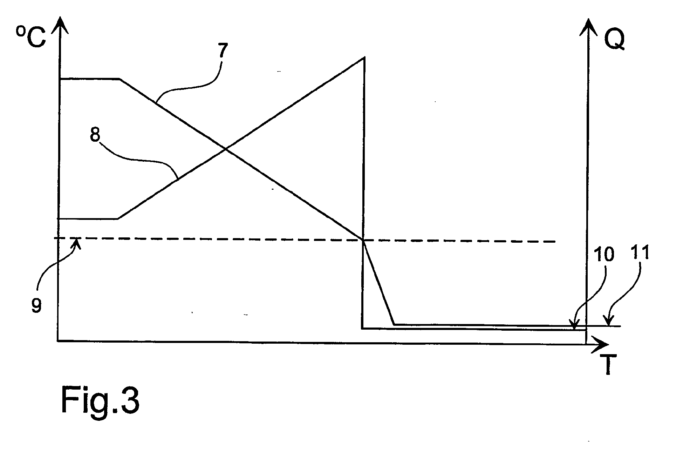

This is effected by a relation between temperature registration and power supply. By registering falling temperature, which is shown with a curve 7, the automatic control 3 will increase the power supply shown by a curve 8. This occurs until there is registered a temperature at a level 9 located below a range of 5°C under the curve 6 (not shown in Fig. 3). At this time, a momentary reduction/interruption of the power supply to a level 10 occurs. Hereby, the temperature will rapidly fall until the temperature in the area (the micro climate) reaches the temperature level 11 in the stable (the macro climate), after which stabilisation of the temperature at this level occurs. The power/heat supply is then only connected at the registering of a temperature within the said range when the piglets are entering the area again.

## Claims

1. Method for controlling the temperature in a piglet nest (1) in a farrowing stable where heat supply is controlled in dependence of a temperature registration in the piglet nest (1), **characterised in that** the temperature registration includes infrared temperature measurement of surface temperature and is used for regulating the surface temperature to a desired predetermined level (6) by registering a surface temperature within a predetermined range around the predetermined level (6), that the heat supply is connected at the registration of a surface temperature within the range, and that the registration of the temperature includes registration of the surface temperature of the animal bodies.

2. A method according to claim 1, **characterised in that** the temperature registration is used also for reducing/interrupting the heat supply at the registration of a temperature under the predetermined range.

3. Method according to clalm1 or claim 2, **characterised in that** the level (6) and the range are changed with time and are preferably decreasing.

4. Method according to any preceding claim, **characterised in that** adjusting of the heat supply is effected as a consequence of temperature registration with fixed time intervals.

5. Method according to any preceding claim for regulating the temperature in the piglet nest (1) in the farrowing stable, **characterised in that** the temperature level falls from about 38°C to about 34°C, or even down to about 29°C, through the first four weeks of life of the piglets, and that the heat supply is reduced/interrupted at the registration of a temperature deviating more than 0.1°C below the said temperature level.

6. Arrangement for controlling the temperature in a piglet nest (1) in a farrowing stable, where heat supply is controlled in dependence of a temperature registration in the piglet nest (1), where the arrangement includes controllable heating lamps (2) that are connected with a temperature measuring device (5), **characterized in that** the temperature measurement device (5) is arranged for measuring a surface temperature of the animal bodies and includes an infrared temperature measuring device (5), and an automatic control (3) arranged for regulating the heating lamps in order to keep the surface temperature at a desired predetermined level (6) at the registration of a surface temperature within a predetermined range around the predetermined level (6).

7. Arrangement according to claim 6, **characterised in that** the automatic control is arranged also for regulating the heating lamps (2) In order to interrupt the heating lamps (2) by registering a temperature below the predetermined range.

8. Arrangement according to claim 7, **characterised in that** the temperature measuring device (5) and the automatic control (3) are incorporated in the heating lamp (2).

9. Arrangement according to any of the preceding claims, **characterised in that** the automatic control (3) is connected with a computer for registering temperature progress and pattern of movement.

## Patentansprüche

1. Verfahren zur Steuerung der Temperatur in einem Ferkelnest (1) in einem Sauenstall, wo die Wärmezufuhr abhängig von einer Temperaturerfassung im Ferkelnest (1) gesteuert wird, **dadurch gekennzeichnet, dass** die Temperaturerfassung infrarote Temperaturmessung der Oberflächentemperatur umfasst und zum Einstellen der Oberflächentemperatur auf ein erwünschtes vorbestimmtes Niveau (6) durch Erfassen einer Oberflächentemperatur innerhalb eines vorbestimmten Bereich, um das vorbestimmte Niveau (6) verwendet wird, dass die Wärmezufuhr mit der Erfassung einer Oberflächentemperatur innerhalb des Bereichs verbunden ist, und dass die Erfassung der Temperatur, die Erfassung der Oberflächentemperatur von den Tierkörpern umfasst.

2. Verfahren nach Anspruch 1, **dadurch gekennzeichnet, dass** die Temperaturerfassung auch zum Reduzieren/Ausschalten der Wärmezufuhr beim Erfassen einer Temperatur unter dem vorbestimmten Bereich angewendet wird.

3. Verfahren nach Anspruch 1 oder Anspruch 2, **dadurch gekennzeichnet, dass** das Niveau (6) und der Bereich mit der Zeit geändert werden und vorzugsweise abnehmen.

4. Verfahren nach irgendeinem der vorhergehenden Ansprüche, **dadurch gekennzeichnet, dass** Anpassung der Wärmezufuhr als eine Folge von Temperaturerfassung mit festgelegten Zeitintervallen erfolgt.

5. Verfahren nach irgendeinem der vorhergehenden Ansprüche zum Einstellen der Temperatur im Ferkelnest (1) im Sauenstall, **dadurch gekennzeichnet, dass** das Temperaturniveau von ca. 38°C bis ca. 34°C, oder sogar herunter bis ca. 29°C, in den ersten vier Wochen des Lebens der Ferkel sinkt, und dass die Wärmezufuhr bei der Erfassung einer Temperatur, die mehr als 0,1°C unter dem Temperaturniveau abweicht, reduziert/ausgeschaltet wird.

6. Anordnung zur Steuerung der Temperatur in einem Ferkelnest (1) in einem Sauenstall, wo die Wärmezufuhr abhängig von einer Temperaturerfassung im Ferkelnest (1) gesteuert wird, wobei die Anordnung steuerbare Wärmelampen (2), die mit einer Temperaturmesseinrichtung (5) verbunden sind, umfasst, **dadurch gekennzeichnet, dass** die Temperaturmesseinrichtung (5) zur Messung einer Oberflächentemperatur der Tierkörper angeordnet ist und eine infrarote Temperaturmesseinrichtung (5) und eine automatische Steuerung (3), die zum Einstellen der Wärmelampen angeordnet ist, umfasst, um die Oberflächentemperatur auf einem erwünschten vorbestimmten Niveau (6) bei der Erfassung einer Oberflächentemperatur innerhalb eines vorbestimmten Bereich um das vorbestimmte Niveau (6) zu halten.

7. Anordnung nach Anspruch 6, **dadurch gekennzeichnet, dass** die automatische Steuerung auch zum Einstellen der Wärmelampen (2) angeordnet ist, um die Wärmelampen (2) beim Erfassen einer Temperatur unter dem vorbestimmten Bereich auszuschalten.

8. Anordnung nach Anspruch 7, **dadurch gekennzeichnet, dass** die Temperaturmesseinrichtung (5) und die automatische Steuerung (3) in der Wärmelampe (2) eingebaut sind.

9. Anordnung nach irgendeinem der vorhergehenden Ansprüche, **dadurch gekennzeichnet, dass** die automatische Steuerung (3) mit einem Computer zum Erfassen des Fortgangs und Bewegungsverlaufs der Temperatur verbunden ist.

## Revendications

1. Procédé de régulation de la température dans un nid à porcelet (1) dans une étable pour truies dans lequel l'alimentation de chauffage est régulée selon un enregistrement de température dans le nid à porcelet (1), **caractérisé en ce que** l'enregistrement de température comprend une mesure de température infrarouge de la température de surface et est utilisé pour la régulation de la température de surface à un niveau désiré prédéterminé (6) par l'enregistrement d'une température de surface dans une plage prédéterminée autour du niveau prédéterminé (6), **en ce que** l'alimentation de chauffage est connectée à l'enregistrement d'une température de surface dans cette plage, et **en ce que** l'enregistrement de la température comprend l'enregistrement de la température de surface des corps des animaux.

2. Procédé selon la revendication 1, **caractérisé en ce que** l'enregistrement de température est également utilise pour la réduction/l'interruption de l'alimentation de chauffage lors de l'enregistrement d'une température en-dessous de la plage prédéterminée.

3. Procédé selon la revendication 1 ou 2, **caractérisé en ce que** le niveau (6) et la plage sont modifiés avec le temps et se diminuent de préférence.

4. Procédé selon l'une quelconque des revendications précédentes, **caractérisé en ce que** le réglage de l'alimentation de chauffage est effectué selon l'enregistrement de température avec des intervalles de temps fixes.

5. Procédé selon l'une quelconque des revendications précédentes pour la régulation de la température dans le nid à porcelet (1) dans l'étable pour truies, **caractérisé en ce que** le niveau de température tombe d'environ 38°C à environ 34°C, ou même à environ 29°C, pendant les quatre premières semaines de la vie des porcelets, et **en ce que** l'alimentation de chauffage est réduite/interrompue lors de l'enregistrement d'une température déviant de plus de 0,1°C en-dessous dudit niveau de température,

6. Dispositif de régulation de la température dans un nid à porcelet (1) dans une étable pour truies, dans lequel l'alimentation de chauffage est régulée selon un enregistrement de température dans le nid à porcelet (1), dans lequel le dispositif comprend des lampes chauffantes ajustables (2) qui sont connectées à un dispositif de mesure de température (5), **caractérisé en ce que** le dispositif de mesure de température (5) est disposé de façon à mesurer la température de surface des corps des animaux et comprend un dispositif de mesure de température infrarouge (5) ainsi qu'un réglage automatique (3) disposé de façon à ajuster les lampes chauffantes pour maintenir la température de surface à un niveau désiré prédéterminé (6) lors de l'enregistrement d'une température de surface dans une plage prédéterminée autour du niveau prédéterminé (6).

7. Dispositif selon la revendication 6, **caractérisé en ce que** le réglage automatique est également disposé de façon à ajuster les lampes chauffantes (2) pour interrompre les lampes chauffantes (2) lors de l'enregistrement d'une température en-dessous de la plage prédéterminée.

8. Dispositif selon la revendication 7, **caractérisé en ce que** le dispositif de mesure de température (5) et le réglage automatique (3) sont incorporés dans la lampe chauffante (2).

9. Dispositif selon l'une quelconque des revendications précédentes, **caractérisé en ce que** le réglage automatique (3) est connecté à un ordinateur pour enregistrer l'avancement de la température et la forme du mouvement.
